# EUROPEAN PATENT SPECIFICATION

(11) **EP 3 850 135 B1**
(45) Date of publication and mention of the grant of the patent: **28.02.2024**
(21) Application number: 19859031.7
(22) Date of filing: 27.08.2019
(51) Int. Cl.: D05C 11/24, D03J 1/04, D05B 67/00, B06B 1/02

(54) **A SYSTEM AND METHOD FOR IN-LINE TREATMENT OF THREAD**
SYSTEM UND VERFAHREN ZUR INLINE-BEHANDLUNG EINES FADENS
SYSTÈME ET PROCÉDÉ DE TRAITEMENT EN LIGNE D'UN FIL

(30) Priority: 15.09.2018 SE 1851092
(43) Date of publication of application: 21.07.2021
(73) Proprietor: COLOREEL GROUP AB, 553 18 Jönköping (SE)
(72) Inventor: EKLIND, Martin, 555 94 Jönköping (SE); STABERG, Joakim, 554 48 Jönköping (SE)
(74) Representative: Ström & Gulliksson AB
(86) International application number: PCT/SE2019/050795
(87) International publication number: WO 2020/055301

(56) References cited:
- EP-A1- 1 484 439
- EP-A1- 2 873 759
- EP-A2- 0 743 385
- WO-A1-2018/044222
- JP-A- H06 299 458
- US-A- 3 843 883
- US-A- 4 298 172
- US-A- 4 602 582
- US-A- 5 671 614
- US-A1- 2009 241 819

## Description

### TECHNICAL FIELD

The present invention relates to the technical field of thread consuming devices. In particular, the present invention relates to a system comprising a treatment unit to be used in association with such thread consuming device.

### BACKGROUND

It has been suggested to provide thread consuming devices, such as embroidery machines or the like, with in-line apparatuses designed to provide the thread with a certain 10 treatment. Such in-line apparatuses could e.g. be used to colour the thread, whereby multiple colour nozzles could replace the current use of multiple pre-coloured threads when producing multi-coloured patterns using embroidery machines. In prior art systems where threads of different colours are used, one thread, having a first specified colour, is used for some stitches while another thread, having a second specified colour, is used for other stitches.

In order to eliminate the obvious drawbacks of the requirement of multiple threads of different colours, the present applicant has filed several patent applications on the technique of in-line colouring of thread, such as WO2016204687 and WO2016204686. The proposed solutions provide improvements in terms of colour quality and also reduces the complexity of the thread consuming device.

Further prior art systems are shown in JPH06299458, EP0743385 and US2009/241819, with JPH06299458 and EP0743385 disclosing systems and methods according to the preambles of claims 1 and 12, respectively.

However, in order to further improve the quality and efficiency of the in-line colouring of threads it would be advantageous if the in-line colouring apparatus could be able to determine if one or several nozzles in the in-line colouring apparatus are in need of maintenance.

### SUMMARY

An object of the present invention is therefore to provide a solution overcoming the disadvantages of prior art. More specifically, the present invention provides a solution where the system for in-line treatment of a thread comprises a light detection system arranged to provide information of the thread to be treated.

According to the invention, a system for in-line treatment of thread for use with a thread consuming device is provided. The system comprises a treatment unit comprising at least one discharge device comprising a at least two nozzles arranged at different positions relative the at least one thread, said at least one thread being in motion in use, each nozzle being configured to dispense one or more coating substances onto the at least one thread when activated. The system further comprises a light detection system for illuminating the at least one thread in order to receive light which is reflected from the at least one thread when said at least one thread is illuminated.

Based on the information gathered from the light detection system it is possible to determine if one or several nozzles in the in-line colouring apparatus are in need of maintenance. Moreover, it is possible to detect the position of the discharge device and its nozzles, the alignment of the discharge device and its nozzles and faults in the dispensing of the coating. Additionally, the information gathered by the light detection system can be used for calibration. For example for calibrating a timer between a trigger and the actual dispensing of coating, calibrating the amount of coating substance (such as ink), calibrating the speed measurement of the thread and/or calibrating the measurements of the thread.

Also according to the invention, a method for in-line treatment of at least one thread for use with a thread consuming device is provided. The method comprises providing a treatment unit comprising at least one discharge device comprising at least two nozzles, arranged at different positions relative the at least one thread, said at least one thread being in motion in use, and wherein each nozzle is configured to dispense one or more coating substances onto the at least one thread when activated. The method further comprises providing a light detection system for illuminating the at least one thread in order to receive light which is reflected from the at least one thread when said at least one thread is illuminated.

The system is configured to be arranged in a first position and in a second position, wherein in the first position the at least one of the plurality of nozzles and the at least one thread are aligned, and wherein in the second position the at least one of the plurality of nozzles and the at least one thread are unaligned, wherein the method further comprises determining if the system is in the first position or in the second position based on the input from the light detection system.

The method may further comprise determining the nozzle position of at least one nozzle at the time when the treatment unit is dispensing one or more coating substances onto the at least one thread, and determining the nozzle position of at least one nozzle at the time when the treatment unit is no longer dispensing one or more coating substances onto the at least one thread.

### Definitions

*Thread consuming device* is in this context any apparatus which in use consumes thread. It may e.g. be an embroidery machine, weaving machine, sewing machine, knitting machine, weaving machine, a tufting machine, a thread winding machine or any other thread consuming apparatus which may benefit from a surface treatment or coating or any other process involving subjecting the thread to a substance, such as dying.

*Treatment* is in this context any process designed to cause a change of the properties of a thread. Such processes include, but are not limited to, colouring, wetting, lubrication, cleaning, fixing, heating, curing, dying, etc.

*Thread* is in this context a flexible elongate member or substrate, being thin in width and height direction, and having a longitudinal extension being significantly greater than the longitudinal extension of any parts of the system described herein, as well as than its width and height dimensions. Typically, a thread may consist of a plurality of plies being bundled or twisted together. The term thread thus includes a yarn, wire, strand, filament, etc. made of various materials such as glass fibre, wool, cotton, synthetic materials such as polymers, metals, polyester, viscos, or e.g. a mixture of wool, cotton, polymer, or metal or any combination thereof.

Within this specification, all references to upstream and/or downstream should be interpreted as relative positions during normal operation of the thread consuming device, i.e. when the device is operating to treat an elongated substrate, such as a thread, continuously moving through the device in a normal operating direction. Hence, an upstream component is arranged such that a specific part of the thread passes it before it passes a downstream component.

### BRIEF DESCRIPTION OF THE DRAWINGS

Embodiments of the invention will be described in the following description of the present invention; reference being made to the appended drawings which illustrate non-limiting examples of how the inventive concept can be reduced into practice.
Fig. 1a is a schematic view of a system for in-line treatment of thread according to an embodiment;
Fig. 1b is a perspective view of a system having a thread consuming device and a treatment unit according to an embodiment;
Fig. 2 is a schematic view of a treatment unit for use with a system according to an embodiment;
Fig. 3 is a schematic view of a discharge device forming part of a treatment unit;
Fig. 4a is a schematic top view of a part of a discharge device according to an embodiment;
Fig. 4b is a schematic top view of a part of a discharge device according to an embodiment;
Fig. 5a is a schematic view of treatment unit with a light detection system according to an embodiment;
Fig. 5b is a schematic view of a the light detection system of Fig. 5b according to an embodiment;
Fig. 6a is a schematic view illustrating when the system is arranged in a first position according to an embodiment;
Fig. 6b is a schematic view illustrating when the system is arranged in a second position according to an embodiment;
Fig. 7a is a schematic view of a calibration method according to an embodiment;
Fig. 7b is a schematic view of an alignment method according to an embodiment;
Fig. 7c is a schematic view of a fault-detection method according to an embodiment;
Fig. 8a is a schematic view of a system according to an embodiment, and
Fig. 8b is a schematic view of a system according to an embodiment.

### DETAILED DESCRIPTION

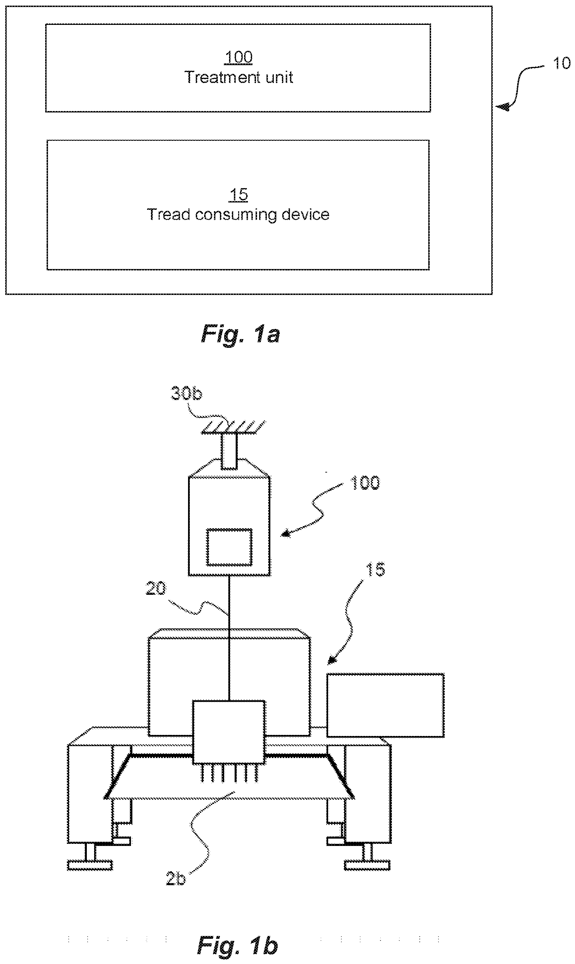

An idea of the present invention is to provide a system and method for distributing a coating substance onto a thread in a controlled manner, for use in association with a thread consumption device. Starting in Fig. 1a a schematic view of system 10 for in-line treatment of thread is shown. The system 10 comprises a treatment unit 100 for dispensing one or more coating substances onto at least one thread. The system 10 further comprises at least one thread consuming device 15, which may e.g. be in the form of one or several embroidery machine(s), a weaving machine(s), a sewing machine(s), knitting machine(s), a tufting machine(s), a thread winding machine(s) etc. The system thereby forms a thread consuming unit, including the at least one thread consuming device 15 and the treatment unit 100. It should be noted that more than one thread can be used in the thread consuming device(s).

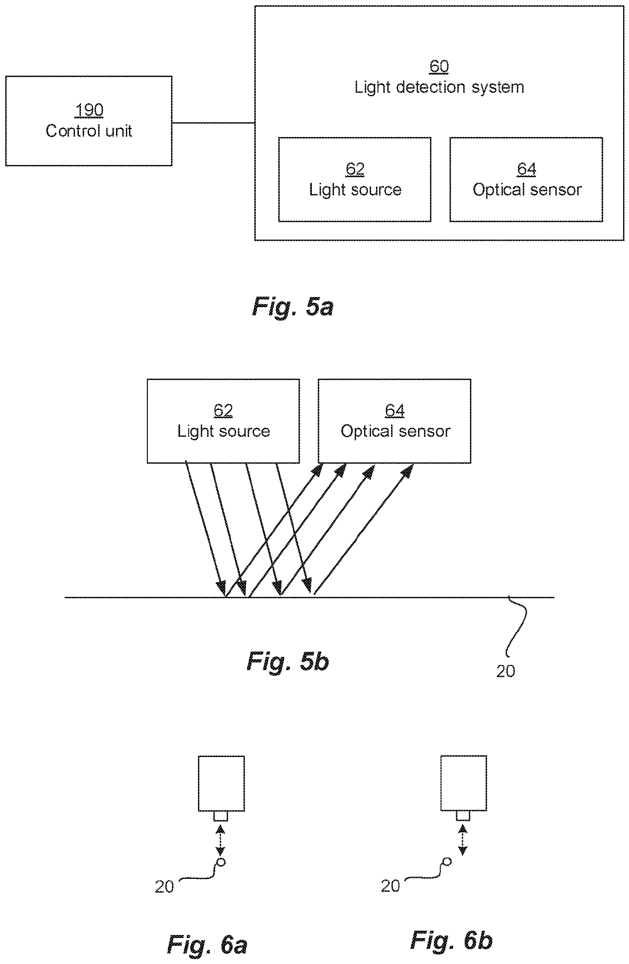

It should be noted that several aspects of a system are described within this specification, and they do not require the inclusion of the thread consuming device 15. As will be further understood from the following, for all embodiments the system for inline treatment of thread requires a treatment unit 100, to be used with a thread consuming device, and a light detection system 60 (see e.g. Figs. 5a-b) for illuminating the at least one thread 20.

Now turning to Fig. 1b the thread consuming device 15 is exemplified as an embroidery machine, here illustrated as a single-head embroidery machine, being equipped with a treatment unit 100. The embroidery machine 15 comprises a moveable stage 2b carrying the fabric to be embroidered. During operation the moveable stage 2b is controlled to rapidly change its position in the X and Y direction (i.e. in this case the horizontal plane, but it could also be in the vertical plane).

The treatment unit 100 allows the embroidery machine 15 to operate without the provision of uniquely pre-coloured threads, as is required for conventional embroidery machines. Instead, the treatment unit 100 provides in-line colouring of a thread 20 in accordance with predetermined colouring patterns, such that a coloured embroidery can be produced. The treatment unit thus replaces individual thread reels as is present in prior art systems.

As is shown in Fig. 1b the only connection between the treatment unit 100 and the embroidery machine 15 is the thread 20, as well as electrical connections (not shown). The treatment unit 100 is thus provided as a stand-alone unit having no mechanical connection with the moveable stage 2b. In an optional embodiment, the stand-alone treatment unit 100 is mounted to the thread consuming device 15 via a suspension arrangement for reducing the transmission of vibrations to the treatment unit 100.

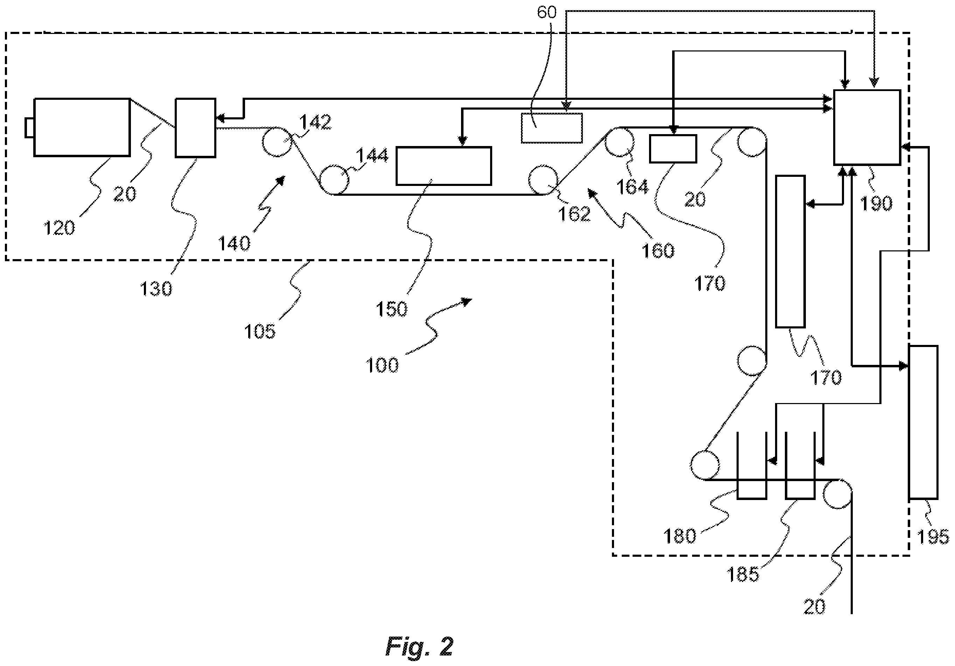

The various components of the treatment unit 100 are shown in Fig. 2. As can be seen in Fig. 2 a majority of the components are arranged inside a housing 105. Immediately downstream the thread reel 120 a thread feeder 130 may be arranged, which is configured to pull the thread forward through the treatment unit 100. The thread feeder 130 is not described further herein, but for a more general understanding the thread feeder 130 receives and forwards the thread 20. For this, the thread feeder 130 is controlled by a control unit 190 described further below. The thread feeder 130 is preferably also configured to control the thread tension, e.g. by means of a driven roller, an encoder wheel, and one or more thread guides. After passing the thread feeder 130 the thread 20 engages with a thread guiding device 140. The thread guiding device 140, which may e.g. be in the form of one or more guiding rollers 142, 144 or other suitable means, is ensuring that the thread 20 is aligned with one or more treatment nozzles forming part of at least one discharge device 150.

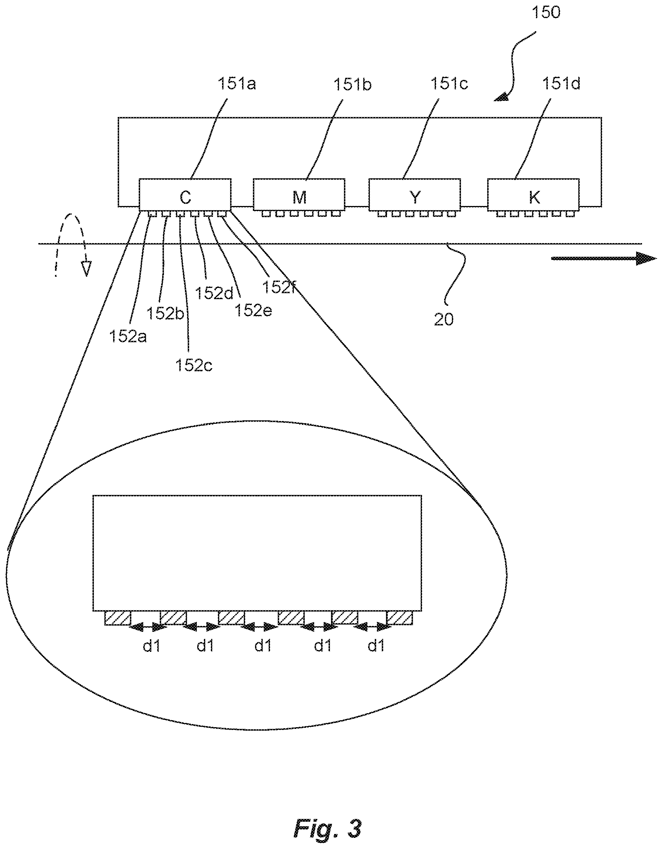

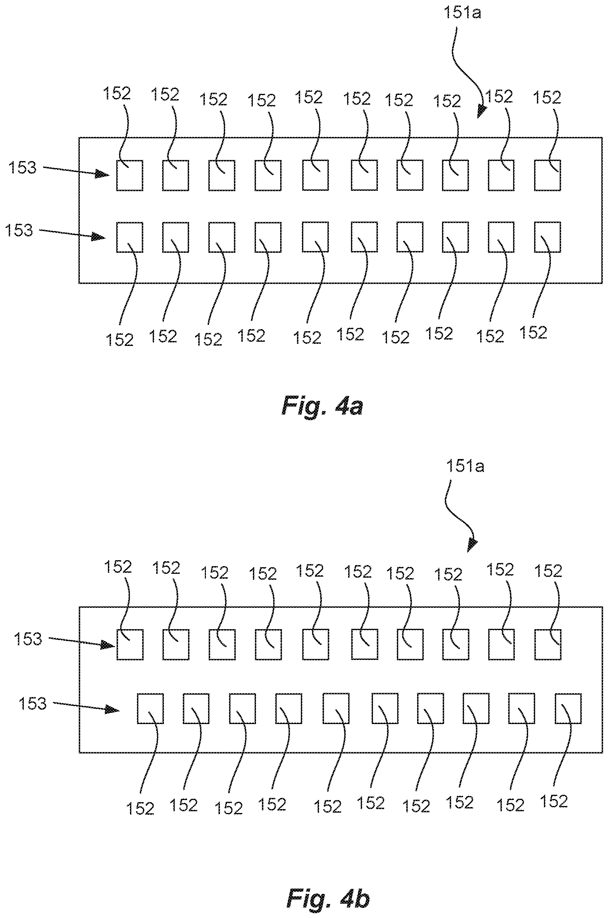

The discharge device 150 is configured to discharge treatment substance, such as a colouring substance, onto the thread 20 as it passes the discharge device 150. For this the nozzles are arranged preferably in the longitudinal direction of the thread 20 as will be further explained in relation to Figs. 3 and 4.

The discharge device 150, or parts of the discharge device 150 such as the print head(s) 151a-d, may be moveable by means of a drive unit (not shown). Having a drive unit will make it possible to arrange the discharge device 150, or parts of the discharge device 150, in different operating states in order to perform different tasks, such as for example a first state of dispensing a coating substance to a thread and a second state of performing a cleaning session, or other maintenance or idling. For this a drive unit may be connected to the discharge device 150, or parts thereof. The drive unit may be configured to move the discharge device 150, or its print head(s), between an idle or maintenance position and an operational position by means of a transmission having different transmission ratios during the motion from the idle position towards the operational position.

Downstream the discharge device 150 another thread guiding device 160 is provided. The second thread guiding device 160 is cooperating with the first thread guiding device 140 such that the position of the thread 20 is correct during its travel along the discharge device 150. The second thread guiding device 160 may e.g. be in the form of one or more guiding rollers 162, 164, although it may also be designed to induce a rotation of the thread 20 along its longitudinal axis. This extra functionality can provide advantages to the colouring as also will be described below.

The system 10 may further comprise a thread speed sensor (not shown) configured to measure the speed of the thread 20 passing through the system 10.

Moreover, a light detection system 60 is arranged downstream the discharge device 150 along the travel direction of the at least one thread 20. The light detection system 60 will be described more in detail with reference to Figs. 5-7.

The thread 20 is then fed forward to pass one or more fixation units 170 which are provided in order to fixate the treatment substance to the thread 20. The fixation unit 170 preferably comprises heating means, such as a hot air supply or heated elements, or an UV light source such that the treatment substance, e.g. a colouring substance, is cured or fixated onto the thread 20. As is shown in Fig. 2 the fixation unit 170 may either be arranged horizontally, vertically, or at an angle between horizontally and vertically.

Before exiting the housing 105 the thread 20 passes a cleaning unit 180, such as an ultrasonic bath, where unwanted particles are removed from the thread 20. As the treatment substance is fixated onto the thread 20, the cleaning unit 180 will leave the treatment substance unaffected.

The treatment unit 100 may further comprise a lubrication unit 185 arranged inside the housing 105. Additional thread buffers and feeders (not shown) may also be included in the treatment unit 100, arranged at various positions in the thread path.

The thread 20 preferably exits the treatment unit 100 through an aperture or similar, whereby the thread 20 is forwarded to an associated thread consuming device, such as an embroidery machine 15 as is shown in Figs. 1a-b.

The thread feeder 130 and the other components engaging with the thread 20 during operation are preferably configured such that the force required to pull the thread 20 from the treatment unit 100, i.e. the pulling force applied by the downstream embroidery machine 15, is approximately the same as if the treatment unit 100 was replaced by prior art thread reels.

A control unit 190 with associated electronics, such as power electronics, communication modules, memories, etc. is also provided. The control unit 190 is connected to the thread feeder 130, the discharge device 150, and the fixation unit 170 for allowing control of the operation of these components. Further, the control unit 190 is configured to controlling operation of the entire treatment unit 100 including the cleaning unit 180, the lubrication unit 185, a disruption of the thread 20, the thread speed at various position along the treatment unit 100, the thread buffers, etc. The control unit 190 may also be configured to receive control signals from one or more components of the treatment unit 100, e.g. control signals for triggering specific control, or other information relating to e.g. thread consumption by the embroidery machine 15.

The control unit 190 may be implemented by any commercially available CPU ("Central Processing Unit"), DSP ("digital signal processor") or any other electronic programmable logic device, or a combination of such processors or other electronic programmable logic device. The control unit 190 may be implemented using instructions that enable hardware functionality, for example, by using executable computer program instructions in a general-purpose or special-purpose processor that may be stored on a computer readable storage medium (disk, memory etc) to be executed by such a processor.

In one embodiment, a user interface is also provided, preferably via a display 195 arranged at the front end of the housing 105. The display 195 allows a user to interact with the control unit 190 and is thus connected thereto, so that the control parameters of the thread feeder 130, the discharge device 150, the fixation unit 170, etc. may be set depending on process specifications. The display 195 may also preferably be used for alerting the user of critical situations, whereby the display 195 may be used for the control unit 190 to issue alarms or the like.

It should be noted that the components described above may not necessarily be included in the stand-alone treatment unit 100, but instead the components of the treatment unit 100 may be separated into several units, of which at least one unit is a stand-alone unit. Preferably, the stand-alone unit includes at least the at least one discharge device 150.

In Fig. 3 a discharge device 150 is shown, forming part of the treatment unit 100 as described above. The direction of movement of the thread 20 in use is indicated by the solid arrow in Fig 3. As will soon be described in more detail, the discharge device 150 comprises a plurality of nozzles 152a-f arranged at different longitudinal positions (for example spaced by a distance d1) along the thread 20 which passes by the treatment unit 100 during use.

Each nozzle 152a-f is arranged to dispense a coating substance, such as ink, onto the thread 20 when the nozzle is activated. The coating substance is absorbed by the thread 20, e.g. at different circumferential positions of the thread 20 when the thread 20 twists about its longitudinal axis. The relative position of two adjacently dispensed droplets of coating substance may be selected such that the droplets will overlap.

The treatment unit 100 comprises one or more discharge devices 150. Each discharge device 150 is preferably formed as a series of ink-jet print heads 151a-d, each print head 151a-d having one or more nozzle arrays. Each nozzle array typically comprises thousands of nozzles. For illustrative purpose only six nozzles 152a-f are shown for one print head 151a-d; it should however be realized that each nozzle array may be provided with thousands of nozzles 152 each. As an example, each print head 151a-d may be associated with a single colour; in the shown example, the discharge device 150 has four print heads 151a-d, each print head 151a-d being associated with a specific colour according to the CMYK standard. However, other colouring models may be used as well.

The exact configuration of the treatment unit 100 may vary. For example, the treatment unit 100 is provided with a single discharge device 150 having a plurality of print heads 151a-d. Each print head 151a-d is in turn provided with a plurality of nozzles 152a-f.

In another embodiment the treatment unit 100 is provided with several discharge devices 150, arranged either in series or in parallel. Each discharge device 150 is then provided with a plurality of print heads 151a-d. If serially arranged, the upstream discharge device 150 may have print heads 151a-d being associated with one or more colours of a specific colour standard, while the downstream discharge device 150 has print heads 151a-d being associated with other colours of the same colour standard. If arranged in parallel, each discharge device 150 may have print heads 151a-d being associated with all colours of a specific colour standard, but with different threads 20. For such embodiment, two separate threads 20 can be treated simultaneously and in parallel. Combinations of parallel/serial configurations are of course also possible.

In a yet further embodiment, the discharge device 150 is only having a single print head 151a-d; dynamic colouring of the thread 20 would then require several discharge devices 150 of the treatment unit 100.

Each nozzle 152a-f may dispense a coating substance having a colour according to the CMYK colour model, where the primary colours are Cyan, Magenta, Yellow, and Black. It may thus be possible to dispense a wide variety of colours onto the thread by activating nozzles 152a-f such that the total colouring substance of a specific length of the thread 20 will be a mix of the colouring substances dispensed by the nozzles 152a-f. As explained earlier, this is preferably achieved by having several print heads 151a-d arranged in series, whereby the nozzles 152a-f of a specific print head 151a-d are dedicated to a single colour.

In another embodiment, each nozzle 152a-f dispenses a coating substance having a colour comprising a mix of two or more primary colours of the CMYK colour model.

The control unit 190 is configured to control the activation of the nozzles 152a-f such as the coating substance is emitted onto the thread 20 as it passes through the treatment unit 100, and especially pass the discharge device 150. By such configuration very precise colouring of the thread 20 is possible e.g. in order to provide advanced embroidery patterns, visually extremely sophisticated by means of the colouring provided by the treatment unit 100.

For a colouring operation the control unit 190 receives one or more input signals specifying the desired colour and/or colouring effect. The colour input preferably includes information regarding the exact colour, as well as the longitudinal start and stop positions of the thread 20 for that particular colour. The longitudinal start and stop position could be represented by specific time values if the thread speed is determined.

Fig. 4a-b illustrates a respective top view of a print head 151a. The print head 151a has a planar surface on which the nozzles 152 are arranged. As mentioned earlier, the total number of nozzles 152 of a single print head can be up to several thousands, provided on a print head 151a in the size of a couple of centimeters. In the shown example, a far less number of nozzles 152 are shown. The nozzles 152 can be distributed in one or more nozzle arrays 153. In Fig. 4a, the nozzles 152 are distributed in two parallel arrays 153. The arrays 153 are aligned with each other, such that nozzles 152 of one array 153 are arranged adjacent a nozzle 152 of the other array 153.

Fig 4b shows a similar example, however there is a longitudinal offset between the two arrays 153.

Fig. 5a-b are schematic illustration of a light detection system 60. The light detection system 60 is arranged to illuminate the thread 20 in order to receive light which is reflected from the thread 20 when the thread 20 is illuminated (as illustrated in Fig. 5b). The information gathered from the light detection signal may for example be used to determine the position of the thread in relation to the discharge device 150, and/or itsnozzles 152a-f, the width of the thread 20 and/or properties of the thread 20. This information can in turn for example be used to detect nozzle(s) that are in need of maintenance, that the position of the nozzle(s) needs to be altered and/or detect variations in the coating substance. The information can additionally, or alternatively, be used by the control unit 190 to control the treatment unit by e.g. detecting nozzle(s) that are not working properly, and/or change the activation timing of the nozzles 152a-f.

As seen in Fig. 2, the light detection system 60 is arranged downstream the discharge device 150 along the travel direction of the at least one thread 20. The light detection system 60 is arranged such that the thread is lead into the light detection system 60 having a known position. The position is preferably known in relation to the light detection system 60.

In one embodiment the light detection system 60 comprises at least one light source 62 and at least an optical sensor 64. In a preferred embodiment, the optical sensor 64 is configured to detect differences in light intensity. Additionally or alternatively, the optical sensor 64 is configured to detect differences related to the wavelength of the received light.

The light source 62 may be any kind of suitable light source, for example one or several light emitting diodes (LEDs). If a plurality of light emitting diodes are used, it is preferred if each of the light sources emit light of a substantially different wavelength band spaced in the visible spectrum.

The optical sensor 64 may for example be a monochrome sensor, a colour sensor or a spectrophotometer. The optical sensor 64 may further be a photodetector such as photoconductive cells, photodiodes, photoresistors, photoswitches, phototransistors, phototubes, photovoltaic cells, light-to-frequency converters, or any other type of photosensor capable of converting light into an electrical signal.

Using a monochrome sensor 64 it is possible to measure the colour intensity. If the monochrome sensor 64 is combined with different kinds of light sources 62, different wavelengths and/or if the light source 62 is configured to filter the light, the monochrome sensor may be used to detect and/or measure the colour of the thread.

In one embodiment, the monochrome sensor 64 is combined with different kinds of light sources 62 having different wavelength intervals. If the different light sources 62 are configured to light the thread in an alternate manner, the control unit 190 may be configured to determine which colour the measured substrate is arranged with.

A colour sensor has the benefit of being able to determine the colour of the thread with a high accuracy. Finally, a spectrophotometer has the benefit of being able to generate a colour spectrum which increases the probability of detecting faulty colours of the substrate(s) and to increase the accuracy in colour readings Moreover, it has the benefit of increasing the possibility of detecting faults in each colour that is to be dispensed.

Most sensors are able to detect that nozzle(s) that does not dispense coating onto a predetermined test pattern. Another benefit with a spectrophotometer is that it is able to detect faults of the nozzle(s) even if the dispensing is not performed in a specific predetermined pattern. In an alternative embodiment, the light detection system 60 comprises an optical sensor 64 being configured to act as a light source as well. The light source may thus be integrated in the optical sensor.

The system 10 is configured to be arranged in a first position and a second position. The relative position between the at least one thread 20 and at least one nozzle 152a-f determines if the system is considered to be in a first or a second position. This is schematically illustrated in Figs. 6a-b, where Fig. 6a illustrates the system 10 being arranged in a first position and Fig. 6b illustrates the system 10 being arranged in a second position.

In a preferred embodiment the different positions are achieved by arranging at least a part of the discharge device 150 in a movable manner (preferably by means of a drive unit), so that at least a part of the discharge device 150, such as for example a print head 151a-d, is movable relative the at least one thread 20 between the first and the second position. In another embodiment the nozzle(s) 152a-f are stationary, and the at least one thread 20 is movably arranged between the first and the second position. In yet one embodiment, both the nozzle(s) 152a-f and the at least one thread 20 are movable.

In the first position the at least one of the plurality of nozzles 152a-f and the at least one thread are aligned with each other. When the at least one of the plurality of nozzles 152a-f and the at least one thread are aligned, the one more coating substances dispensed from the at least one nozzle 152a-f will have a high success in hitting the at least one thread 20. The first position is thus to be considered as an operational position. The first position can also be seen as the aligned position.

In the second position the at least one of the plurality of nozzles 152a-f and the at least one thread are unaligned with each other. When the at least one of nozzle 152a-f and the at least one thread are unaligned, the one more coating substances dispensed from the at least one nozzle 152a-f is more likely to miss the at least one thread 20. The second position is thus a position where the thread cannot be accurately coloured by the coating substance. This position can be seen as a maintenance position or calibration position. The second position can also be seen as an unaligned position.

In other words, in the first position, the likelihood that the dispensed coating substance will hit the thread 20 is the greatest. With an increased distance from this position, the less likelihood it is for the nozzles to dispense coating onto the thread 20.

The control unit 190 is configured to determine if the system 10 is in the first or second position (i.e. if the nozzles and the thread are aligned or unaligned) based on the input received from the light detection system 60.

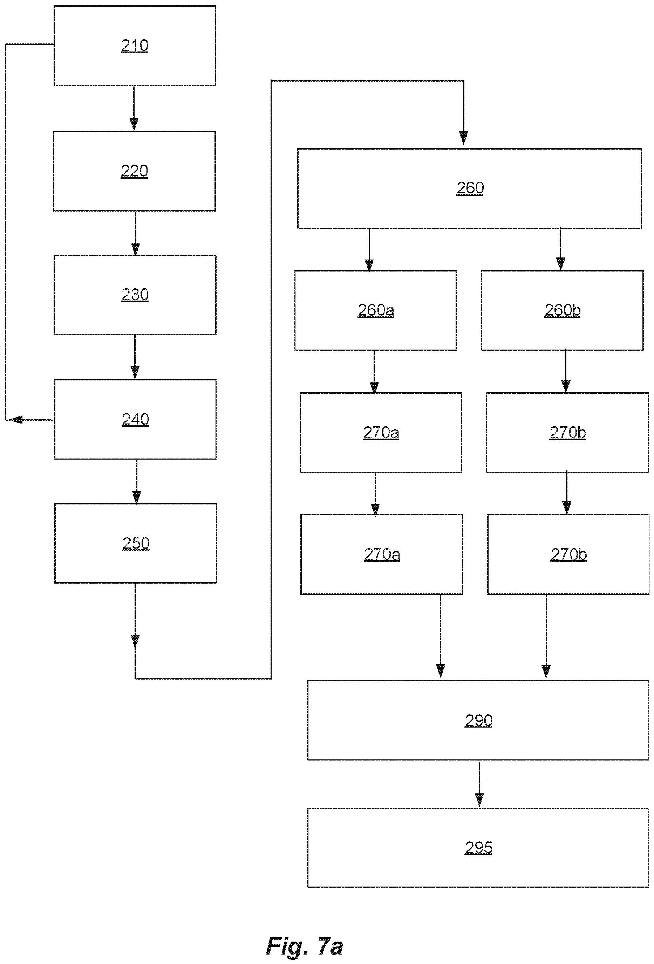

Fig. 7a illustrates a situation where the input received from the light detection system 60 is used to calibrate the relative position of the nozzle(s) in relation to the at least one thread 20. In this exemplary situation the nozzles are movable in relation to the thread, however the method is applicable to the opposite situation as well where the thread is movable in relation to the nozzle(s) and a situation where both the thread and the nozzle(s) are moving.

In a first step 210, the nozzles are stopped at a position where the nozzles and the thread are not aligned. Once in this position, one or more of the nozzles discharge 220 the coating substance one or several times. In a next step, the thread is fed 230 forward in a step by step manner 240. The nozzles are first moved towards the thread, step by step, until the thread is aligned with the nozzles. As the nozzles moves towards the thread, the likelihood of the thread getting hit by the coating substance increases. The movement after the thread has passed will thus move the nozzles away from the thread 20. As longer from the thread the nozzles moves, the less will the probability be that the substance dispensed will hit the thread.

The steps of discharging 220 a coating substance, feeding 230 the thread and moving 240 the nozzles is repeated while the following procedure is activated.

The light detection system 60 receives 250 the reflected light from the thread 20. This information is used to determine 260 if the system 10 is in the first or second position (i.e. aligned or unaligned). The system is further configured to determine if the system is moving from the first position towards the second position or if the system is moving from the second position towards the first position In other words, the nozzles are first moving towards the thread until the thread is aligned, and will then continue its movement passed the thread and away from it.

In the situation where the system is moving from the first position towards the second positon the thread has been aligned with the nozzle and the thread has thus been dispensed with coating. The nozzles are moving away from the aligned position by having passed the thread and continue in the same direction away from it towards a position where the likelihood of the thread getting hit with coating is lower..

In the situation where the system is moving from the second position towards the first positon the thread has been unaligned with the nozzles, hence no coating has been dispensed to the thread. The nozzles are moving towards the aligned position where the dispensed coating will hit the thread.

The information received from the light detection system 60 is configured to be used to determine if the coating substance hit the thread 20 or not. Additionally, or alternatively, the information gathered may be used to visually inspect with what time, and possibly at which position, the coating hit the thread 20.

The control unit 190 may further be configured to determine when the best of coating substance occurred to the thread. This is achieved by letting the nozzles move from a position before the thread towards a position where the thread and nozzles are aligned, and then further to a position located after the thread.

In one embodiment, when the system has determined 260a that the system has been moved from a position where the thread is not aligned towards a position where the thread is aligned, , the control unit 190 is further configured to determine 270a the nozzle position of at least one nozzle 152a-f at the time when the system determined that the at least one nozzle is dispensing one or more coating substances onto the thread 20. The nozzle position of the dispensing position is saved 280a in an associated memory of the control unit 190.

When the system has determined 260b that the system has been moved from the first position to the second position (unaligned position), the control unit 190 is further configured to determine 270b the nozzle position of at least one nozzle 152a-f at the time when the at least one nozzle is no longer dispensing one or more coating substances onto the thread 20. The nozzle position of the non-dispensing position is saved 280b in an associated memory of the control unit 190.

In some embodiments the control unit 190 is configured to repeat the procedure of determining the nozzle positions of the first and second position until a satisfactory accuracy has been achieved.

The nozzle positions of the aligned and unaligned positions are used to determine 290 the centre point of the thread 20, i.e. the point where the nozzles where arranged in the centre of the thread. This is achieved by using by calculating a mean value or average value of the nozzle positions of the dispensing and non-dispensing positions.

The calculated centre point is preferably saved in an associated memory of the control unit 190. The calculated centre point can be used as the new operating position in the calibrated system. Hence, the position of the at least one nozzle may be altered 295 based on the centre point value.

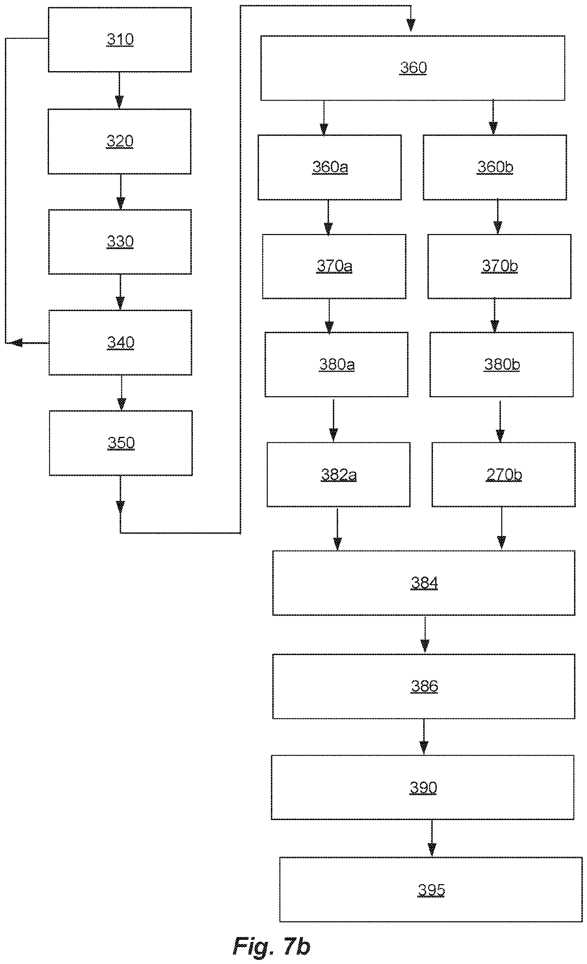

Fig. 7b illustrates a method of aligning the nozzle(s) with the thread 20. In this exemplary situation, the nozzles are movable in relation to the thread, however the method is applicable to the opposite situation as well where the thread is movable in relation to the nozzle(s).

In a first step 310, the nozzles 152 are stopped at a position where the nozzles 152 and the thread 20 are not aligned. Once in this position, the two nozzles 152 being arranged at or close to the outermost ends of the nozzle array (one in each end of the nozzle array) or print head (one in each end of the print head) is configured to discharge 320 the coating substance one or several times. In a next step, the thread is fed 330 forward so that the respective nozzles will discharge a coating substance onto the thread and such that the light detection system 60 can receive a light representing the discharge on the thread downstream the treatment unit 100.. In a next step, the nozzles 152 are moved so that the respective nozzles will discharge a coating substance onto the thread and such that the light detection system 60 can receive a light representing the discharge on the thread downstream the treatment unit 100.

The steps of discharging 320 a coating substance, feeding 330 the thread and moving 340 the nozzles is repeated while the following procedure is activated.

The light detection system 60 receives 350 the reflected light from the thread 20. This information is used to determine 360 if the system 10 is in the first or second position.

When the system has determined 360a that the system has been moved from the second position to the first position (aligned position), the control unit 190 is further configured to determine 370a the nozzle position of at least one nozzle 152a-f at the time when the system determined that the at least one nozzle is dispensing one or more coating substances onto the thread 20. The nozzle position of the dispensing position is saved 380a in an associated memory of the control unit 190. The control unit 190 is further configured to determine 382a which of the nozzles 152a-f (hence the first or the last nozzle in the array or print head) that was the detected nozzle.

When the system has determined 370b that the system has been moved from the first position to the second position (unaligned position), the control unit 190 is further configured to determine 370b the nozzle position of at least one nozzle 152a-f at the time when the at least one nozzle is no longer dispensing one or more coating substances onto the thread 20. The nozzle position of the non-dispensing position is saved 380b in an associated memory of the control unit 190. The control unit 190 is further configured to determine 382b which of the nozzles 152a-f (hence the first or the last nozzle in the array or print head) that was the detected nozzle.

In some embodiments the control unit 190 is configured to repeat the procedure of determining the nozzle positions of the first and second position until a satisfactory accuracy has been achieved.

The control unit 190 is further configured to determine 384 the angle of the at least two nozzles in relation to the at least one thread based on the stored nozzle positions. This angle is used to alter 386 the relationship between the nozzles 152a-f and the thread . In this way the detected difference is either decreased or removed. The alternation of the nozzle positions can either be performed automatically by the system 10, or manually by an operator.

In the case where the alteration of the position is performed manually, it is preferred if the control unit 190, based on the detected angle, informs the operator of the detected angle. This can be performed by showing the angle or other feedback related to the angle in the display 195.

The nozzle positions of the aligned and unaligned positions are then used to determine 390 the centre point of the thread 20, i.e. the point where the nozzles where arranged in the centre of the thread. This is achieved by using by calculating a mean value or average value of the nozzle positions of the dispensing and non-dispensing positions.

The calculated centre point is preferably saved in an associated memory of the control unit 190. The calculated centre point can be used as the new operating position in the calibrated system. Hence, the position of the at least one nozzle may be altered 395 based on the centre point value.

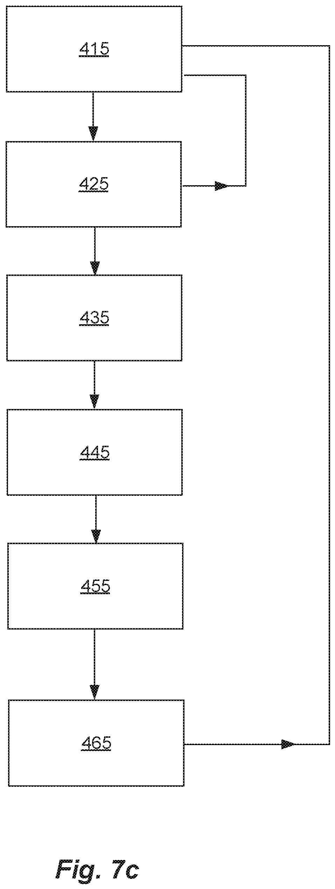

Fig. 7c illustrates a method of detecting nozzles that are not working or nozzles that are not working properly. In this exemplary situation, the nozzles are movable in relation to the thread, however the method is applicable to the opposite situation as well where the thread is movable in relation to the nozzle(s).

The nozzle to be evaluated is arranged in a first position, hence being aligned with the thread 20. In a first step, the nozzle to be tested is configured to dispense 415 a coating substance onto a predetermined distance of the thread. The distance may for example be 5mm.

In a further step, another nozzle to be tested is arranged in the first position and is configured to dispense 425 a coating substance onto another predetermined position of the thread.

The above steps 415, 425 are repeated until all nozzles that are to be tested have been dispensing coating substance onto the thread. At the same time, the following steps are performed.

The light detection system 60 is, together with the control unit 190, configured to detect 435 the pattern, i.e. the coating substance, that been provided onto the thread 20. The control unit 190 evaluates 445 the data and compares it against a predetermined pattern. If the measured data does not match with the predetermined pattern, the system detects that at least one of the nozzles are not working properly. The control unit 190 is then configured to determine 455 which nozzle that is not working or not working properly.

This pattern can occur in a sequence being requested by the user, or automatically by the system, but it can also be used during operation on parts of the embroidery which will not be visible.

The control unit 190 may be configured to, if it is determined that a nozzle is not working properly, initiate 465 a cleaning sequence onto that nozzle or print head. Once the cleaning sequence is completed, the steps 415-445 are performed again. In this way it is possible to determine if the nozzle(s) now are working properly, or if there is need for further maintenance steps.

If it is determined, after the cleaning sequence is completed and the evaluating steps 415-445 have been performed, the controller 190 is configured to mark this specific nozzle as a non-working nozzle. The treatment unit 100 disregards nozzles being marked as non-working, and the non-working nozzle will thus not affect the quality of the in-line treatment of the thread 20.

In one embodiment, the data received from the light detection system 60 additionally, or alternatively, be used to detect deviant properties of the coated thread 20. The control unit 190 is configured to determine at least one property of the one or more coating substances dispensed onto the at least one thread 20. This is determined based on the data received from the light detection system 60. The control unit 190 may further be configured to compare said at least one determined property against at least one predetermined property. If said at least one determined property and the at least one predetermined property does not match within a tolerance limit, the control unit 190 may be configured to generate an alarm signal. The alarm signal may for example be shown on the display 195, and/or be an audible alarm and/or a visual alarm for example by illuminating light or the like. Additionally or alternative, if the determined property and the predetermined property does not match within a tolerance limit, the control unit 190 may be configured to adjust the position of different components of the system 10. By adjusting the position of different components of the system 10 (such as for example the thread, the nozzles, etc.), and/or by controlling the dispensing pattern, the system 10 can account for a possible altered length of the thread (being shrunk or extended).

The property of the substance dispensed onto the thread may for example be colour. The control unit 190 may thus be configured to determine the colour of the colouring substance that has been dispensed to the thread. In a preferred embodiment, the control unit 190 is configured to determine the colour of the colouring substance that has been dispensed to a specified section of the at least one thread 20. The control unit 190 may further be configured to compare the determined colour against a predetermined colour scheme in order to determine if the colour applied to the thread is within predetermined tolerance limits. If the control unit 190 detects that the colour is close to a tolerance limit, the control unit 190 is configured to adapt the operation of the discharge device 150 such that the error in colour is reduced or eliminated. In other words, the control unit 190 is configured to determine if the right colour is applied to the right section of the thread, and otherwise alter the operation of the system 10.

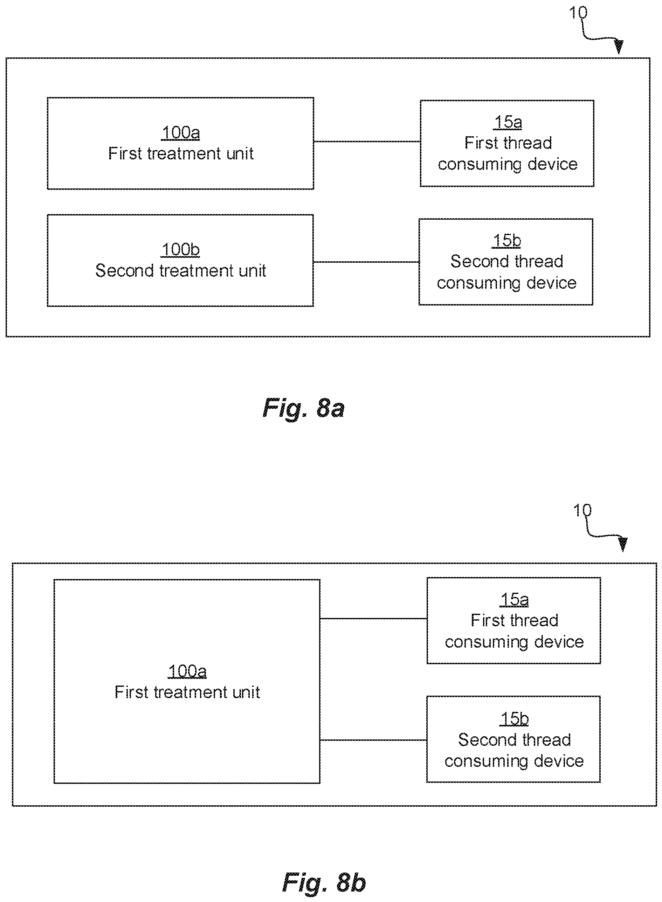

Although the present invention has been mainly described with reference to a system comprising one treatment unit 100 and one thread consuming device 15, it should be understood by a person skilled in the art that the inventive features could be applied to other systems as well. Figs. 8a-b illustrates two example of such alternative systems.

In Fig. 8a, the system 10 comprises a first and a second treatment unit 100a, 100b as well as a first and a second thread consuming device 15a-b. Each treatment unit 100a, 100b is controlling and performing the operations on each thread consuming device 15a-b. It should be noted that the first and second treatment unit 100a, although being separated may share one or more components. In one embodiment, the control unit 190 is arranged as a separate unit from the first and second treatment unit 100a, 100b and one control unit 190 is thus configured to control the operation of both treatment units 100a, 100b and correspondingly the operation of both thread consuming devices 15a-b.

In Fig. 8b, the system 10 comprises one treatment unit 100a and a first and a second thread consuming device 15a-b. In this embodiment, one treatment unit 100a is configured to control and perform the operation of the two thread consuming devices 15a-b.

It should be noted that although only two treatment units and two thread consuming devices are shown in Fig. 8a, and only one treatment unit and two thread consuming devices are shown in Fig. 8b, it should be understood that any reasonable number of treatment units and/or thread consuming devices could be present in the system 10.

Although the present invention has been described above with reference to specific embodiments, it is not intended to be limited to the specific form set forth herein. Rather, the invention is limited only by the accompanying claims.

In the claims, the term "comprises/comprising" does not exclude the presence of other elements or steps. Additionally, although individual features may be included in different claims, these may possibly advantageously be combined, and the inclusion in different claims does not imply that a combination of features is not feasible and/or advantageous. In addition, singular references do not exclude a plurality. The terms "a", "an", "first", "second" etc do not preclude a plurality. Reference signs in the claims are provided merely as a clarifying example and shall not be construed as limiting the scope of the claims in any way.

## Claims

1. A system (10) for in-line treatment of thread (20) for use with a thread consuming unit (15), comprising:
a treatment unit (100) comprising at least one discharge device (150) comprising at least two nozzles (152a-f), arranged at different positions relative the at least one thread (20), said at least one thread (20) being in motion in use, being configured to dispense one or more coating substances onto the at least one thread (20) when activated;
a light detection system (60) for illuminating the at least one thread (20) in order to receive light which is reflected from the at least one thread (20) when said at least one thread (20) is illuminated;
wherein the discharge device (150) is moveable relative the at least one thread (20) and/or the at least one thread (20) is movable relative the discharge device (150),
**characterized in that** the system (10) is configured to be arranged in an aligned position and a un-aligned position, wherein in the aligned position at least one of the plurality of nozzles (152a-f) and the at least one thread are aligned, and wherein in the un-aligned position at least one of the plurality of nozzles (152a-f) and the at least one thread are unaligned; and
a control unit (190) is configured to:
receive data from the light detection system (60), and
determine if the system is in the aligned position or in the un-aligned position based on the input from the light detection system (60).

2. The system (10) according to claim 1, wherein the light detection system (60) is arranged on a downstream side of the discharge device (150) along the travel direction of the at least one thread (20).

3. The system (10) according to claim 1 or 2, wherein the light detection system comprises at least one light source (62) and at least one sensor (64).

4. The system (10) according to any one of claims 1 to 3, wherein the control unit (190) is further configured to:
control and/or evaluate the operation of the treatment unit (100) based on said received data.

5. The system (10) according to claim 4, wherein the operation of the treatment unit (100) is controlled by adjusting the position of at least one of the nozzles (152a-f).

6. The system (10) according to any one of claims 1 to 5, wherein if the control unit (190) has determined that the system is in the aligned position, the control unit (190) is further configured to:
determine the nozzle position of at least one of the nozzles (152a-f) at the time when the treatment unit (100) is dispensing one or more coating substances onto the at least one thread (20), and
store said nozzle position.
and wherein if the control unit (190) has determined that the system is in the un-aligned position, the control unit (190) is further configured to:
determine that a nozzle (152a-f) of the treatment unit (100) is no longer dispensing one or more coating substances onto the at least one thread (20),
determine the position of that nozzle (152a-f) at that time, and
store said nozzle position.

7. The system (10) according to claim 6, wherein the control unit (190) is further configured to:
determine a centre point of the at least one thread (20) by calculating the average of the stored nozzle positions, and
alter the position of at least one of the nozzles (152a-f) based on the centre point value.

8. The system (10) according to claim 6 or 7, wherein the control unit (190) is further configured to:
determine the angle of the at least two nozzles (152a-f) in relation to the at least one thread (20) based on the stored nozzle positions,
alter the position of the at least two nozzles (152a-f) based on the angle.

9. The system (10) according to to any of the preceding claims, wherein the control unit (190) is further configured to:
determine at least one property of the one or more coating substances dispensed onto the at least one thread (20) based on the input from the light detection system (60).

10. The system (10) according to claim 3, wherein the sensor (64) is an optical sensor.

11. The system (10) according to any of the preceding claims, wherein the thread consuming unit (15) is an embroidery machine, a sewing machine, a knitting machine, a weaving machine, a tufting machine, a thread winding machine, and or any combination thereof.

12. A method for providing in-line treatment of at least one thread (20), comprising:
providing a light detection system (60) for illuminating the at least one thread (20) in order to receive light which is reflected from the at least one thread (20) when said at least one thread (20) is illuminated, and
providing a treatment unit (100) comprising at least one discharge device (150) comprising at least two nozzles (152a-f), arranged at different positions relative the at least one thread (20), said at least one thread (20) being in motion in use, each nozzle being configured to dispense one or more coating substances onto the at least one thread when activated, wherein the discharge device (150) is moveable relative the at least one thread (20) and/or the at least one thread (20) is movable relative the discharge device (150) **characterized in that** the system (10) is configured to be arranged in an aligned position and a un-aligned position, wherein in the aligned position at least one of the plurality of nozzles (152a-f) and the at least one thread are aligned, and wherein in the un-aligned position at least one of the plurality of nozzles (152a-f) and the at least one thread are unaligned;
providing a control unit (190) configured to receive data from the light detection system (60), and determine if the system is in the aligned position or in the unaligned position based on the input from the light detection system (60).

13. The method according to claim 12, wherein the method further comprises:
determining the nozzle position of at least one of the nozzles (152a-f) at the time when the treatment unit (100) is dispensing one or more coating substances onto the at least one thread (20), and
determining the nozzle position of at least one of the nozzles (152a-f) at the time when the treatment unit (100) is no longer dispensing one or more coating substances onto the at least one thread (20).

## Patentansprüche

1. System (10) zur Inline-Behandlung von Faden (20) zur Verwendung mit einer Fadenverbrauchseinheit (15), aufweisend:
eine Behandlungseinheit (100), die zumindest eine Abgabevorrichtung (150) aufweist, die zumindest zwei Düsen (152a-f) aufweist, angeordnet an unterschiedlichen Positionen relativ zu dem zumindest einen Faden (20), wobei der zumindest eine Faden (20) in Gebrauch in Bewegung ist, und so konfiguriert, eine oder mehrere Beschichtungssubstanzen auf den zumindest einen Faden (20) auszugeben, wenn sie aktiviert wird; und
ein Lichterfassungssystem (60) zum Beleuchten des zumindest einen Fadens (20), um Licht zu empfangen, das von dem zumindest einen Faden (20) reflektiert wird, wenn der zumindest eine Faden (20) beleuchtet wird;
wobei die Abgabevorrichtung (150) relativ zu dem zumindest einen Faden (20) bewegbar ist und/oder der zumindest eine Faden (20) relativ zu der Abgabevorrichtung (150) bewegbar ist,
**dadurch gekennzeichnet, dass das** System (10) dazu konfiguriert ist, in einer ausgerichteten Position und einer nicht-ausgerichteten Position angeordnet zu sein, wobei in der ausgerichteten Position zumindest eine der Vielzahl von Düsen (152a-f) und der zumindest eine Faden ausgerichtet sind, und wobei in der nicht-ausgerichteten Position zumindest eine der Vielzahl von Düsen (152a-f) und der zumindest eine Faden nicht ausgerichtet sind; und
eine Steuereinheit (190) dazu konfiguriert ist:
Daten vom Lichterfassungssystem (60) zu empfangen, und
zu bestimmen, ob das System auf Grundlage des Inputs von dem Lichterfassungssystem (60) in der ausgerichteten Position oder in der nicht-ausgerichteten Position ist.

2. System (10) nach Anspruch 1, wobei das Lichterfassungssystem (60) auf einer stromabwärtigen Seite der Abgabevorrichtung (150) entlang der Bewegungsrichtung des zumindest einen Fadens (20) angeordnet ist.

3. System (10) nach Anspruch 1 oder 2, wobei das Lichterfassungssystem zumindest eine Lichtquelle (62) und zumindest einen Sensor (64) aufweist.

4. System (10) nach einem der Ansprüche 1 bis 3, wobei die Steuereinheit (190) ferner dazu konfiguriert ist:
den Betrieb der Behandlungseinheit (100) auf der Grundlage der empfangenen Daten zu steuern und/oder auszuwerten.

5. System (10) nach Anspruch 4, wobei der Betrieb der Behandlungseinheit (100) durch Einstellen der Position von zumindest einer Düse (152a-f) gesteuert wird.

6. System nach einem der Ansprüche 1 bis 5, wobei dann, wenn die Steuereinheit (190) bestimmt hat, dass das System in der ausgerichteten Position ist, die Steuereinheit (190) ferner dazu konfiguriert ist,
die Düsen-Position von zumindest einer der Düsen (152a-f) zu dem Zeitpunkt zu bestimmen, zu dem die Behandlungseinheit (100) einen oder mehrere Beschichtungssubstanzen auf den zumindest einen Faden (20) ausgibt, und
diese Düsen-Position zu speichern;
und wobei dann, wenn die Steuereinheit (190) bestimmt hat, dass das System in der nicht-ausgerichteten Position ist, die Steuereinheit (190) ferner dazu konfiguriert ist:
zu bestimmen, dass eine Düse (152a-f) der Behandlungseinheit (100) nicht mehr einen oder mehrere Beschichtungssubstanzen auf den zumindest einen Faden (20) ausgibt,
die Position dieser Düse (152a-f) zu diesem Zeitpunkt zu bestimmen, und
diese Düsen-Position zu speichern.

7. System (10) nach Anspruch 6, wobei die Steuereinheit (190) ferner dazu konfiguriert ist:
einen Mittelpunkt des zumindest einen Fadens (20) durch Berechnen des Durchschnitts der gespeicherten Düsen-Positionen zu bestimmen, und
die Position von zumindest einer der Düsen (152a-f) auf Grundlage des Mittelpunktswerts zu ändern.

8. System (10) nach Anspruch 6 oder 7, wobei die Steuereinheit (190) ferner dazu konfiguriert ist:
den Winkel der zumindest zwei Düsen (152a-f) in Bezug auf den zumindest einen Faden (20) auf Grundlage der gespeicherten Düsen-Positionen zu bestimmen,
die Position der zumindest zwei Düsen (152a-f) auf Grundlage des Winkels zu ändern.

9. System (10) nach einem der vorstehenden Ansprüche, wobei die Steuereinheit (190) ferner dazu konfiguriert ist:
zumindest eine Eigenschaft der einen oder mehreren Beschichtungssubstanzen, die auf den zumindest einen Faden (20) ausgegeben werden, auf Grundlage des Inputs von dem Lichterfassungssystem (60) zu bestimmen.

10. System (10) nach Anspruch 3, wobei der Sensor (64) ein optischer Sensor ist.

11. System nach einem der vorstehenden Ansprüche, wobei die Fadenverbrauchseinheit (15) eine Stickmaschine, eine Nähmaschine, eine Strickmaschine, eine Webmaschine, eine Tuftingmaschine, eine Fadenwickelmaschine oder eine beliebige Kombination davon ist.

12. Verfahren zur Inline-Behandlung von zumindest einem Faden (20), das aufweist:
Bereitstellen eines Lichterfassungssystems (60) zum Beleuchten des zumindest einen Fadens (20), um Licht zu empfangen, das von dem zumindest einen Faden (20) reflektiert wird, wenn der zumindest eine Faden (20) beleuchtet wird, und
Bereitstellen einer Behandlungseinheit (100), die zumindest eine Abgabevorrichtung (150) aufweist, die zumindest zwei Düsen (152a-f) aufweist, angeordnet an unterschiedlichen Positionen relativ zu dem zumindest einen Faden (20), wobei der zumindest eine Faden (20) im Gebrauch in Bewegung ist, jede Düse dazu konfiguriert ist, eine oder mehrere Beschichtungssubstanzen auf den zumindest einen Faden auszugeben, wenn sie aktiviert wird, wobei die Abgabevorrichtung relativ zu dem zumindest einen Faden (20) bewegbar ist und/oder der zumindest eine Faden (20) relativ zu der Abgabevorrichtung (150) bewegbar ist, **dadurch gekennzeichnet, dass** das System (10) dazu konfiguriert ist, in einer ausgerichteten Position und in einer nicht-ausgerichteten Position angeordnet zu sein, wobei in der ausgerichteten Position zumindest eine der Vielzahl von Düsen (152a-f) und der zumindest eine Faden ausgerichtet sind, und wobei in der nicht-ausgerichteten Position zumindest eine der Vielzahl von Düsen (152a-f) und der zumindest eine Faden nicht ausgerichtet sind;
Bereitstellen einer Steuereinheit (190), die dazu konfiguriert ist, Daten von dem Lichterfassungssystem (60) zu empfangen, und zu bestimmen, ob das System auf Grundlage des Inputs von dem Lichterfassungssystem (60) in der ausgerichteten Position oder in der nicht-ausgerichteten Position ist.

13. Verfahren nach Anspruch 12, wobei das Verfahren ferner aufweist:
Bestimmen der Düsen-Position von zumindest einer der Düsen (152a-f) zu dem Zeitpunkt, zu dem die Behandlungseinheit (100) eine oder mehrere Beschichtungssubstanzen auf den zumindest einen Faden (20) ausbringt, und
Bestimmen der Düsen-Position von zumindest einer der Düsen (152a-f) zu dem Zeitpunkt, zu dem die Behandlungseinheit (100) eine oder mehrere Beschichtungssubstanzen nicht mehr auf den zumindest einen Faden (20) ausbringt.

## Revendications

1. Système (10) de traitement en ligne d'un fil (20) à utiliser avec une unité de consommation de fil (15), comprenant :
une unité de traitement (100) comprenant au moins un dispositif de décharge (150) comprenant au moins deux buses (152a à f) agencées à différentes positions par rapport à l'au moins un fil (20), ledit au moins un fil (20) étant en mouvement pendant l'utilisation, étant configurées pour distribuer une ou plusieurs substances de revêtement sur l'au moins un fil (20) lorsqu' activée ;
un système de détection de lumière (60) pour éclairer l'au moins un fil (20) pour recevoir de la lumière qui est réfléchie depuis l'au moins un fil (20) lorsque ledit au moins un fil (20) est éclairé ;
dans lequel le dispositif de décharge (150) est mobile par rapport à l'au moins un fil (20) et/ou l'au moins un fil (20) est mobile par rapport au dispositif de décharge (150),
**caractérisé en ce que** le système (10) est configuré pour être agencé dans une position alignée et une position non alignée, dans lequel, dans la position alignée, au moins l'une de la pluralité de buses (152a à f) et l'au moins un fil sont alignés, et dans lequel, dans la position non alignée, au moins l'une de la pluralité de buses (152a à f) et l'au moins un fil sont non alignés ; et
une unité de commande (190) est configurée pour :
recevoir des données provenant du système de détection de lumière (60), et
déterminer si le système est dans la position alignée ou dans la position non alignée sur la base de l'entrée du système de détection de lumière (60).

2. Système (10) selon la revendication 1, dans lequel le système de détection de lumière (60) est agencé sur un côté en aval du dispositif de décharge (150) le long de la direction de déplacement de l'au moins un fil (20) .

3. Système (10) selon la revendication 1 ou 2, dans lequel le système de détection de lumière comprend au moins une source de lumière (62) et au moins un capteur (64) .

4. Système (10) selon l'une quelconque des revendications 1 à 3, dans lequel l'unité de commande (190) est en outre configurée pour :
commander et/ou évaluer le fonctionnement de l'unité de traitement (100) sur la base desdites données reçues.

5. Système (10) selon la revendication 4, dans lequel le fonctionnement de l'unité de traitement (100) est commandé en réglant la position d'au moins l'une des buses (152a à f).

6. Système (10) selon l'une quelconque des revendications 1 à 5, dans lequel si l'unité de commande (190) a déterminé que le système est dans la position alignée, l'unité de commande (190) est en outre configurée pour :
déterminer la position de buse d'au moins l'une des buses (152a à f) au moment où l'unité de traitement (100) distribue une ou plusieurs substances de revêtement sur l'au moins un fil (20), et
stocker ladite position de buse,
et dans lequel si l'unité de commande (190) a déterminé que le système est dans la position non alignée, l'unité de commande (190) est en outre configurée pour :
déterminer qu'une buse (152a à f) de l'unité de traitement (100) ne distribue plus une ou plusieurs substances de revêtement sur l'au moins un fil (20),
déterminer la position de cette buse (152a à f) à ce moment, et stocker ladite position de buse.

7. Système (10) selon la revendication 6, dans lequel l'unité de commande (190) est en outre configurée pour :
déterminer un point central de l'au moins un fil (20) en calculant la moyenne des positions de buse stockées, et
modifier la position d'au moins l'une des buses (152a à f) sur la base de la valeur du point central.

8. Système (10) selon la revendication 6 ou 7, dans lequel l'unité de commande (190) est en outre configurée pour :
déterminer l'angle des au moins deux buses (152a à f) par rapport à l'au moins un fil (20) sur la base des positions de buse stockées,
modifier la position des au moins deux buses (152a à f) sur la base de l'angle.

9. Système (10) selon l'une quelconque des revendications précédentes, dans lequel l'unité de commande (190) est en outre configurée pour :
déterminer au moins une propriété des une ou plusieurs substances de revêtement distribuées sur l'au moins un fil (20) sur la base de l'entrée du système de détection de lumière (60).

10. Système (10) selon la revendication 3, dans lequel le capteur (64) est un capteur optique.

11. Système (10) selon l'une quelconque des revendications précédentes, dans lequel l'unité de consommation de fil (15) est une machine à broder, une machine à coudre, une machine à tricoter, une machine à tisser, une machine à touffeter, une machine de bobinage de fil, et/ou toute combinaison de celles-ci.

12. Procédé pour fournir un traitement en ligne d'au moins un fil (20), comprenant :
la fourniture d'un système de détection de lumière (60) pour éclairer l'au moins un fil (20) pour recevoir de la lumière qui est réfléchie depuis l'au moins un fil (20) lorsque ledit au moins un fil (20) est éclairé, et
la fourniture d'une unité de traitement (100) comprenant au moins un dispositif de décharge (150) comprenant au moins deux buses (152a à f), agencées à différentes positions par rapport à l'au moins un fil (20), ledit au moins un fil (20) étant en mouvement pendant l'utilisation, chaque buse étant configurée pour distribuer une ou plusieurs substances de revêtement sur l'au moins un fil lorsqu'activée, dans lequel le dispositif de décharge (150) est mobile par rapport à l'au moins un fil (20) et/ou l'au moins un fil (20) est mobile par rapport au dispositif de décharge (150), **caractérisé en ce que** le système (10) est configuré pour être agencé dans une position alignée et une position non alignée, dans lequel, dans la position alignée, au moins l'une de la pluralité de buses (152a à f) et l'au moins un fil sont alignés, et dans lequel, dans la position non alignée, au moins l'une de la pluralité de buses (152a à f) et l'au moins un fil sont non alignés ;
la fourniture d'une unité de commande (190) configurée pour recevoir des données provenant du système de détection de lumière (60), et déterminer si le système est dans la position alignée ou dans la position non alignée sur la base de l'entrée provenant du système de détection de lumière (60).

13. Procédé selon la revendication 12, dans lequel le procédé comprend en outre :
la détermination de la position de buse d'au moins l'une des buses (152a à f) quand l'unité de traitement (100) distribue une ou plusieurs substances de revêtement sur l'au moins un fil (20), et
la détermination de la position de buse d'au moins l'une des buses (152a à f) quand l'unité de traitement (100) ne distribue plus une ou plusieurs substances de revêtement sur l'au moins un fil (20).
